# EUROPÄISCHE PATENTANMELDUNG

(11) **EP 4 815 282 A1**
(43) Veröffentlichungstag der Anmeldung: **30.09.2026**
(21) Anmeldenummer: 25166888.5
(22) Anmeldetag: 28.03.2025
(51) Int. Cl.: H02M 1/10, H02M 1/42, H05B 6/06

(54) **NETZTEIL ZUR ELEKTRISCHEN VERSORGUNG EINES WIDERSTANDSHEIZBANDS**

(71) Anmelder: ROPEX Industrie-Elektronik GmbH, 74321 Bietigheim-Bissingen (DE)
(72) Erfinder: Dr. Fuchs, Oliver, 74360 Ilsfeld (DE)
(74) Vertreter: Patentanwälte Magenbauer & Kollegen Partnerschaft mbB

(57) **Zusammenfassung**

Die Erfindung betrifft ein Netzteil (1; 21; 41; 61) zur elektrischen Versorgung eines Widerstandsheizbands (100), mit einem Gleichspannungswandler, der einen Versorgungsstromkreis (3; 23; 43; 63) mit einer Primärspule (71) und einen Verbraucherstromkreis (4; 24; 44; 64) mit einer Sekundärspule (72) aufweist, die einen Transformator (73) bilden, wobei der Versorgungsstromkreis (3; 23; 43; 63) eine Parallelschaltung der Primärspule (71) mit einer ersten Diodengruppe (91), die eine Reihenschaltung von zwei Dioden umfasst, und mit einer zweiten Diodengruppe (92), die eine Reihenschaltung von zwei Dioden umfasst, aufweist und wobei der Versorgungsstromkreis (3; 21; 41; 61) eine Reihenschaltung der Primärspule (71) mit einem Leistungstransistor (5; 25; 45; 65) aufweist, der elektrisch mit einer Steuerung (10; 30; 50; 70) verbunden ist, die dazu ausgebildet ist, eine Ansteuerung des Leistungstransistors (5; 25; 45; 65) in Abhängigkeit von einer Bereitstellung einer Gleichspannung oder einer einphasigen oder zweiphasigen Wechselspannung an den Versorgungsstromkreis (3; 21; 41; 61) vorzunehmen.

## Beschreibung

Die Erfindung betrifft ein Netzteil zur elektrischen Versorgung eines Widerstandsheizbands.

Aus dem Produktprogramm der Anmelderin ist der RES-Temperaturregler bekannt, der für eine elektrische Versorgung eines als Widerstandsheizband ausgeführten Schweißwerkzeugs ausgebildet ist. Hierzu nimmt der RES-Temperaturregler eine kontinuierliche Messung des Stroms und der Spannung vor, die an das Widerstandsheizband bereitgestellt werden, um damit die Temperatur des als Temperatursensor dienenden Widerstandsheizbands zu regeln. Dabei wird der Messzyklus 50-mal/Sekunde (50 Hz) oder 60-mal/Sekunde (60 Hz) ausgeführt.

Die Aufgabe der Erfindung besteht darin, ein Netzteil zur elektrischen Versorgung eines Widerstandsheizbands bereitzustellen, das einen vereinfachten Aufbau aufweist.

Diese Aufgabe wird für ein Netzteil der eingangs genannten Art dadurch gelöst, dass das Netzteil einen Gleichspannungswandler aus der Gruppe: Sperrwandler, Eintaktflusswandler, Gegentaktflusswandler in Parallelspeisung, Gegentaktflusswandler mit Halbbrückenansteuerung, Gegentaktflusswandler mit Vollbrückenansteuerung, umfasst, wobei der Gleichspannungswandler einen Versorgungsstromkreis mit einer Primärspule und einen Verbraucherstromkreis mit einer Sekundärspule aufweist, wobei die Primärspule und die Sekundärspule einen Transformator bilden, wobei der Versorgungsstromkreis eine Parallelschaltung der Primärspule mit einer ersten Diodengruppe, die eine Reihenschaltung von zwei Dioden umfasst, und mit einer zweiten Diodengruppe, die eine Reihenschaltung von zwei Dioden umfasst, aufweist und wobei der Versorgungsstromkreis eine Reihenschaltung der Primärspule mit einem Leistungstransistor aufweist, wobei der Leistungstransistor elektrisch mit einer Steuerung verbunden ist, die dazu ausgebildet ist, eine Ansteuerung des Leistungstransistors in Abhängigkeit von einer Bereitstellung einer Gleichspannung oder einer einphasigen Wechselspannung oder einer zweiphasigen Wechselspannung an den Versorgungsstromkreis vorzunehmen.

Gleichspannungswandler aus der Gruppe: Sperrwandler, Eintaktflusswandler, Gegentaktflusswandler in Parallelspeisung, Gegentaktflusswandler mit Halbbrückenansteuerung, Gegentaktflusswandler mit Vollbrückenansteuerung sind aus dem Stand der Technik bekannt und werden in Schaltnetzteilen für elektrische Verbraucher wie Computer, Mobiltelefone, Kleinmotoren eingesetzt, die auf eine elektrische Versorgung mit einer stabilen Gleichspannung angewiesen sind. Bei Anwendungen mit höherem elektrischen Leistungsbedarf muss der negative Einfluss, den der Gleichspannungswandler mit dem daran angeschlossenen elektrischen Verbraucher auf das Stromnetz ausübt und der als Netzrückwirkung bezeichnet wird, unterhalb eines vom Netzbetreiber vorgegebenen Niveaus gehalten werden. Um diese Vorgabe erfüllen zu können, ist der Einsatz einer aktiven Leistungsfaktorkorrektur üblich, die einen erheblichen schaltungstechnischen Aufwand erfordert.

Um für das erfindungsgemäße Netzteil einen möglichst einfachen Schaltungsaufbau erzielen zu können, wird das Netzteil für elektrische Verbraucher optimiert, die im Betrieb eine gewisse Trägheit aufweisen und daher nicht auf eine stabile Ausgangsspannung / Verbraucherspannung angewiesen sind. Exemplarisch für träge elektrische Verbraucher sind neben Widerstandsheizbändern auch Leuchtmittel wie Glühbirnen oder elektrische Schweißgeräte zu nennen. Bei einem derartigen elektrischen Verbraucher kann ohne funktionale Einschränkungen seiner Nutzbarkeit in Kauf genommen werden, dass die im Verbraucherstromkreis des Gleichspannungswandlers bereitgestellte Ausgangsspannung, mit der der elektrische Verbraucher versorgt wird, gewisse Schwankungen aufweist. Beispielhaft kann vorgesehen sein, dass die Ausgangsspannung bei einer elektrischen Versorgung des Netzteils mit einer einphasigen Netzwechselspannung oder mit einer zweiphasigen Netzwechselspannung bei einer Bereitstellung von elektrischer Leistung an den Verbraucher mit der doppelten Frequenz wie die Netzwechselspannung oszilliert. Dies gilt für den Fall, dass der Verbraucher keine nennenswerten kapazitiven und/oder induktiven Eigenschaften hat und somit als ohmscher Verbraucher oder ohmsche Last bezeichnet werden kann.

Bei einer Verwendung des Netzteils zur elektrischen Versorgung eines Widerstandsheizbands ist vorzusehen, dass die vom Netzteil bereitgestellte Ausgangsspannung präzise vorgegeben werden kann, um die zum Schweißen und/oder Trennen von thermoplastischen Kunststoffen erforderliche Temperatur exakt einhalten zu können. Aufgrund der thermischen Trägheit des Widerstandsheizbands ist es jedoch ausreichend, wenn mit einer vom Netzteil bereitgestellten mittleren Ausgangsspannung eine daraus resultierende mittlere Temperatur des Widerstandsheizbands eingehalten werden kann, auch wenn die Ausgangsspannung mit erheblichen Schwankungen behaftet ist und die zur Einhaltung der gewünschten Temperatur für das Widerstandsheizband erforderliche elektrische Leistung nur bei Mittelung über einen längeren Zeitraum, vorzugsweise über eine halbe Netzperiode, bereitgestellt wird.

Durch die Anpassung des Netzteils an elektrische Verbraucher, die Schwankungen in der Ausgangsspannung tolerieren können, sofern eine mittlere Ausgangsspannung präzise gehalten werden kann, ist es möglich, auf eine aktive Leistungsfaktorkorrektur zu verzichten. Hierdurch kann der Aufbau der elektrischen Schaltung für das Netzteil einfach gehalten werden, verschleißanfällige Komponenten wie beispielsweise Kondensatoren mit großer Kapazität können vermieden werden.

Ferner kann eine Steuerung des Netzteils, die für eine Ansteuerung wenigstens eines im Versorgungsstromkreis angeordneten Leistungstransistors ausgebildet ist, zunächst ermitteln, welche elektrische Versorgung für den Versorgungsstromkreis vorliegt. Anschließend kann die Steuerung eine von der elektrischen Versorgung sowie von den Eigenschaften der am Verbraucherstromkreis angeschlossenen Last abhängige Ansteuerung des wenigstens einen Leistungstransistor vornehmen. Die Anzahl der Leistungstransistoren, die im Versorgungsstromkreis und gegebenenfalls zusätzlich im Verbraucherstromkreis angeordnet sind, hängt von der Ausgestaltung des Gleichspannungswandlers ab. Im einfachsten Fall wird ein Sperrwandler eingesetzt, der lediglich einen einzigen Leistungstransistor im Versorgungsstromkreis benötigt. Bei einem Eintakt-Flusswandler und bei einem Gegentakt-Flusswandler mit Halbbrücke sind zwei Leistungstransistoren im Versorgungsstromkreis angeordnet. Bei einem Gegentakt-Flusswandler mit Vollbrücke sind vier Leistungstransistoren im Versorgungsstromkreis und vier Leistungstransistoren im Verbraucherstromkreis angeordnet.

Bei einer Bereitstellung eines Gleichstroms an den Versorgungstromkreis, beispielsweise durch Verbindung des Netzteils mit einem Akkumulator oder eine Batterie, wird kein Gebrauch von der ersten Diodengruppe und der zweiten Diodengruppe gemacht. Die Steuerung kann hierbei eine Ansteuerung des wenigstens einen Leistungstransistors durchführen, die in vorteilhafter Weise auf die Eigenschaften der am Verbraucherstromkreis angeschlossenen Last angepasst ist, da keine Verbindung mit einem elektrischen Netz vorliegt und damit auch keine Netzrückwirkungen berücksichtigt werden müssen.

Eine Bereitstellung einer ein- oder zweiphasigen (Netz-)Wechselspannung erfolgt an der ersten und zweiten Diodengruppe, mit der eine Gleichrichtung der Wechselspannung durchgeführt wird. Die Steuerung nimmt hierbei eine Ansteuerung des wenigstens einen Leistungstransistors derart vor, dass eine Zwischenkreisspannung und die Ausgangsspannung des Netzteils mit der gleichen Frequenz wie die gleichgerichtete (Netz-)Wechselspannung oszillieren. Hiermit kann in vorteilhafter Weise ein hoher Leistungsfaktor erzielt werden, da der Laststrom durch die elektrisch mit dem Verbraucherstromkreis verbundene ohmsche Last, insbesondere durch das Widerstandsheizband, proportional zur gleichgerichteten Wechselspannung verläuft.

Bei einer solchen Auslegung des Netzteils kann der aus einer Primärspule und einer Sekundärspule gebildete Transformator als kostengünstiger Hochfrequenztransformator ausgebildet sein.

Vorteilhafte Weiterbildungen der Erfindung sind Gegenstand der Unteransprüche.

Zweckmäßig ist es, wenn der Versorgungsstromkreis eine Parallelschaltung der Primärspule mit einer dritten Diodengruppe, die eine Reihenschaltung von zwei Dioden aufweist, umfasst und dass die Steuerung dazu ausgebildet ist, eine Ansteuerung des Leistungstransistors in Abhängigkeit von einer Bereitstellung einer dreiphasigen Wechselspannung an den Versorgungsstromkreis vorzunehmen. Durch die zusätzliche Bereitstellung einer dritten Diodengruppe, die in Parallelschaltung zur Primärspule sowie zur ersten und zur zweiten Diodengruppe angeordnet ist, kann eine Versorgung des Netzteils mit einer dreiphasigen (Netz-)Wechselspannung vorgesehen werden. Die Steuerung ist dazu ausgebildet, die Bereitstellung der drei Phasen an den drei Diodengruppen zu detektieren und eine entsprechende Ansteuerung des wenigstens einen Leistungstransistors vorzunehmen.

Bevorzugt ist vorgesehen, dass im Versorgungsstromkreis eine Reihenschaltung der Primärspule mit einer Zwischenkreisspule und eine Parallelschaltung der Primärspule mit einem Zwischenkreiskondensator vorgesehen ist, wobei die Zwischenkreisspule und der Zwischenkreiskondensator einen Tiefpassfilter mit einer Grenzfrequenz von wenigstens 3 kHz, vorzugsweise wenigstens 4 kHz, insbesondere wenigstens 5 kHz, bilden. Durch die Kombination von Zwischenkreisspule und Zwischenkreiskondensator wird eine Pufferung der Schaltfrequenz des wenigstens einen Leistungstransistors, die zumindest 100 mal höher als die Frequenz der (Netz-)Wechselspannung ist, ermöglicht. Hingegen ist es nicht erforderlich, eine Filterung im Bereich der Frequenz der (Netz-)Wechselspannung vorzunehmen, so dass der Zwischenkreiskondensator mit einer erheblich kleineren Kapazität verglichen mit einem aus dem Stand der Technik bekannten Netzteil verwirklicht werden kann, ohne dass hierdurch die Anforderungen der Netzbetreiber im Hinblick auf die Netzrückwirkung außer Acht gelassen würden. Rein exemplarisch kann davon ausgegangen werden, dass der Zwischenkreiskondensator für das erfindungsgemäße Netzteil eine Kapazität aufweist, die weniger als 5 Prozent einer Kapazität eines Zwischenkreiskondensators für ein aus dem Stand der Technik bekanntes Netzteil beträgt. Durch die geringe Zwischenkreiskapazität reduziert sich auch der Aufwand für die Begrenzung des Einschaltstroms erheblich oder kann sogar gänzlich entfallen.

Bevorzugt ist vorgesehen, dass die Kapazität des Zwischenkreiskondensators für das erfindungsgemäße Netzteil bei einer Optimierung des Netzteils für ein Widerstandsheizband zum Verschweißen von Kunststofffolien eine Kapazität kleiner 50 Mikrofarad, vorzugsweise kleiner 25 Mikrofarad, besonders bevorzugt kleiner 15 Mikrofarad, insbesondere kleiner 10 Mikrofarad, aufweist. Die elektrische Ausgangsleistung für ein derart optimiertes erfindungsgemäßes Netzteil kann rein exemplarisch in einem Bereich von 2000 Watt bis 10000 Watt angesiedelt sein.

Besonders vorteilhaft ist es, wenn der Zwischenkreiskondensator eine Kapazität aufweist, die derart gewählt ist, dass eine Zwischenkreisspannung und eine Verbraucherspannung bei einer Leistungsabgabe an eine ohmsche Last mit einer Frequenz oszillieren, die der Frequenz einer gleichgerichteten, einphasigen oder zweiphasigen oder dreiphasigen Versorgungsspannung entspricht. Bei einer einphasigen oder zweiphasigen Versorgungspannung ist somit eine Oszillation der Zwischenkreisspannung und der Verbraucherspannung mit der doppelten Netzfrequenz vorgesehen. Bei einer dreiphasigen Versorgungspannung ist somit eine Oszillation der Zwischenkreisspannung und der Verbraucherspannung mit der sechsfachen Netzfrequenz vorgesehen.

Da der Laststrom hierbei proportional zur gleichgerichteten Netzspannung verläuft, wird ein vorteilhaft hoher Leistungsfaktor für das Netzteil mit der daran angeschlossenen ohmschen Last gewährleistet, so dass auf eine Leistungsfaktorkorrektur verzichtet werden kann. Hieraus resultiert im Vergleich zu bekannten Netzteilen, die für eine Versorgung von Widerstandsheizbändern ausgelegt sind, eine einfachere Aufbauweise und ein Entfall von Kondensatoren mit hoher Kapazität.

Bei einer Weiterbildung der Erfindung ist vorgesehen, dass die Steuerung für eine Messung eines zeitlichen Verlaufs der Zwischenkreisspannung sowie für eine Umschaltung zwischen unterschiedlichen Ansteuerfrequenzen für den Leistungstransistor bei einer Umschaltung der Versorgungsspannung zwischen einem einphasigen oder zweiphasigen oder dreiphasigen Betrieb ausgebildet ist. Hiermit wird eine automatische Anpassung der Ansteuerung des wenigstens einen Leistungstransistors an unterschiedliche Versorgungssituationen ermöglicht. Findet beispielsweise zunächst eine Versorgung des Netzteils mit einer dreiphasigen Versorgungsspannung statt, so erfolgt eine Ansteuerung des wenigstens einen Leistungstransistors mit einer ersten Ansteuerfrequenz. Tritt beispielsweise durch einen Defekt die Situation ein, dass eine der Phasen der Versorgungsspannung ausfällt und somit nur noch eine zweiphasige Versorgungsspannung vorliegt, so wird dies durch die Steuerung detektiert und es findet eine Anpassung der Ansteuerfrequenz statt.

Zweckmäßig ist es, wenn die Steuerung dazu ausgebildet ist, die zur zyklischen Ansteuerung des Leistungstransistors genutzte Ansteuerungsfrequenz proportional zu einer Zwischenkreisspannung im Versorgungsstromkreis anzupassen. Durch Variation der Ansteuerungsfrequenz proportional zur momentan anliegenden Zwischenkreisspannung, wird sowohl eine Minimierung der Schaltverluste für den wenigstens einen Leistungstransistor erreicht als auch eine gleichbleibende magnetische Aussteuerung des aus der Primärspule, der Sekundärspule und einem zugehörigen Ferritkern gebildeten Transformators gesorgt. Das ist sowohl für einen sinusförmigen als auch für einen nicht sinusförmigen Verlauf der Versorgungsspannung möglich.

Bevorzugt ist vorgesehen, dass die Steuerung elektrisch mit einem Sensor verbunden ist, der zur Bereitstellung eines Sensorsignals in Abhängigkeit von einer Temperatur eines Widerstandsheizbands ausgebildet ist. Mithilfe des Sensors, bei dem es sich insbesondere um das Widerstandsheizband handeln kann, wird eine Temperaturregelung für den Schweißvorgang ermöglicht. Vorzugsweise ist die Steuerung dazu ausgebildet, eine Beeinflussung der Temperatur des Widerstandsheizbands durch eine Pulsweitenmodulation der Zwischenkreisspannung vorzunehmen. Hierzu ist vorgesehen, die aktuelle Temperatur des Widerstandsheizbands durch eine Bestimmung des elektrischen Widerstands des Widerstandsheizbands zu ermitteln und anhand einer Differenz zwischen der aktuellen Temperatur und einer Solltemperatur einen elektrischen Leistungsbedarf für das Widerstandsheizband zu bestimmen. Dieser Leistungsbedarf wird von der Steuerung in Abhängigkeit von der Versorgungsspannung und den elektrischen Eigenschaften des Transformators und des Widerstandsheizbands in eine Vorgabe für eine Pulsdauer umgerechnet, mit der der wenigstens eine Leistungstransistor angesteuert wird.

Die Aufgabe der Erfindung wird auch durch ein Verfahren zur Bereitstellung von elektrischer Leistung an ein Widerstandsheizband gelöst, bei dem vorgesehen ist, dass bei Bereitstellung einer einphasigen Versorgungsspannung oder einer zweiphasigen Versorgungsspannung an einen Versorgungsstromkreis eines Gleichspannungswandlers aus der Gruppe: Sperrwandler, Eintaktflusswandler, Gegentaktflusswandler in Parallelspeisung, Gegentaktflusswandler mit Halbbrückenansteuerung, Gegentaktflusswandler mit Vollbrückenansteuerung eine Bereitstellung einer Verbraucherspannung in einem Verbraucherstromkreis des Gleichspannungswandlers phasengleich zur Versorgungsspannung erfolgt. Hierdurch wird ein vorteilhaft hoher Leistungsfaktor für das Netzteil mit der daran angeschlossenen ohmschen Last gewährleistet, so dass auf eine Leistungsfaktorkorrektur verzichtet werden kann.

Bei einer Weiterbildung des Verfahrens ist vorgesehen, dass eine Steuerung des Gleichspannungswandlers einen Leistungstransistor in einem Versorgungsstromkreis in Abhängigkeit von einer Bereitstellung einer einphasigen oder zweiphasigen Versorgungsspannung ansteuert. Hierbei ist vorgesehen, dass eine automatische Anpassung der Ansteuerung des wenigstens einen Leistungstransistors an unterschiedliche Versorgungssituationen vorgenommen wird, um stets einen optimalen Leistungsfaktor und eine minimale Netzrückwirkung für das Netzteil gewährleisten zu können.

Hierzu kann in weiterer Ausgestaltung des Verfahrens vorgesehen werden, dass die Steuerung eine Zwischenkreisspannung im Versorgungsstromkreis des Gleichspannungswandlers ermittelt und eine Ansteuerungsfrequenz für den Leistungstransistor proportional zur ermittelten Zwischenkreisspannung einstellt. Dies ermöglicht eine automatische Anpassung der Ansteuerungsfrequenz an die jeweilige Versorgungssituation für das Netzteil, die zwischen einer einphasigen oder zweiphasigen oder dreiphasigen Wechselstromversorgung oder einer Gleichspannungsversorgung variiert werden kann, ohne dass dazu schaltungstechnische Anpassungen erforderlich sind. Vielmehr ist vorzusehen, dass die Steuerung die jeweilige Ansteuerungsfrequenz für den wenigstens einen Leistungstransistor und die jeweilige Pulsweitenmodulation für die Ansteuerung des wenigstens einen Leistungstransistors in Abhängigkeit von der Versorgungssituation sowie von dem Leistungsbedarf des angeschlossenen elektrischen Verbrauchers, insbesondere des Widerstandsheizbands, einstellt. Hierzu ist vorzugsweise vorgesehen, dass die Steuerung ein Sensorsignal eines Temperatursensors für die Pulsweitenmodulation der Ansteuerungsfrequenz für den Leistungstransistor verwendet.

Bei einer Weiterbildung des Verfahrens ist vorgesehen, dass die Steuerung bei einer Ausgestaltung des Gleichspannungswandlers als Gegentaktflusswandler mit Vollbrückenansteuerung eine phasenverschobene Pulsweitenmodulation der Ansteuerungsfrequenz für den Leistungstransistor verwendet, um einen Schaltvorgang des Leistungstransistors bei verschwindender Spannung zu erreichen. Diese Art der Ansteuerung des wenigstens einen Leistungstransistor wird auch als "zero voltage switching" bezeichnet und dient dazu, die elektrischen Schaltverluste des wenigstens einen Leistungstransistors auf ein möglichst geringes Maß zu reduzieren.

Vorteilhafte Ausführungsformen der Erfindung sind in der Zeichnung dargestellt. Hierbei zeigt:
- Figur 1: ein schematisches Schaltbild einer ersten Ausführungsform eines Netzteils auf Basis eines Sperrwandlers,
- Figur 2: ein schematisches Schaltbild einer zweiten Ausführungsform eines Netzteils auf Basis eines Eintakt-Flusswandlers,
- Figur 3: ein schematisches Schaltbild einer dritten Ausführungsform eines Netzteils auf Basis eines Gegentakt-Flusswandlers mit Halbbrücke im Primärkreis und passiver Gleichrichtung im Sekundärkreis, und
- Figur 4: ein schematisches Schaltbild einer vierten Ausführungsform eines Netzteils auf Basis eines Gegentakt-Flusswandlers mit Vollbrücke im Primärkreis und synchroner Gleichrichtung im Sekundärkreis.

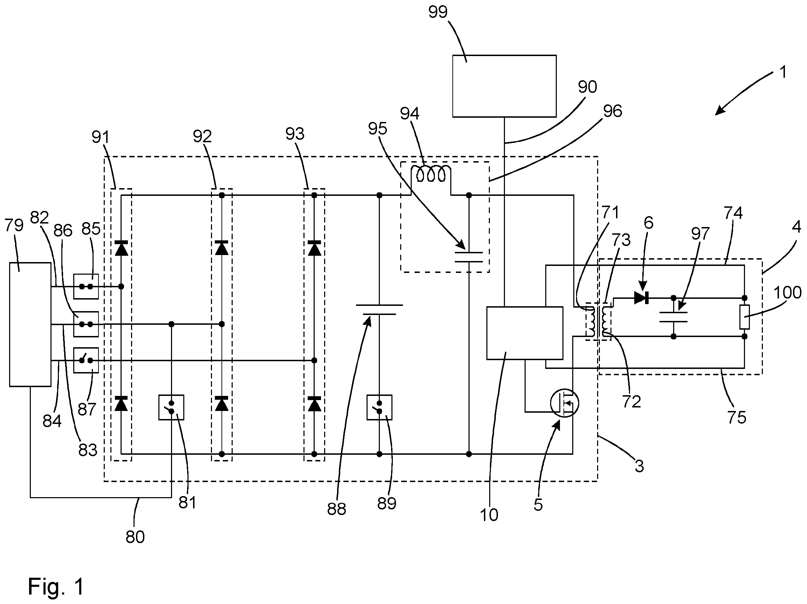

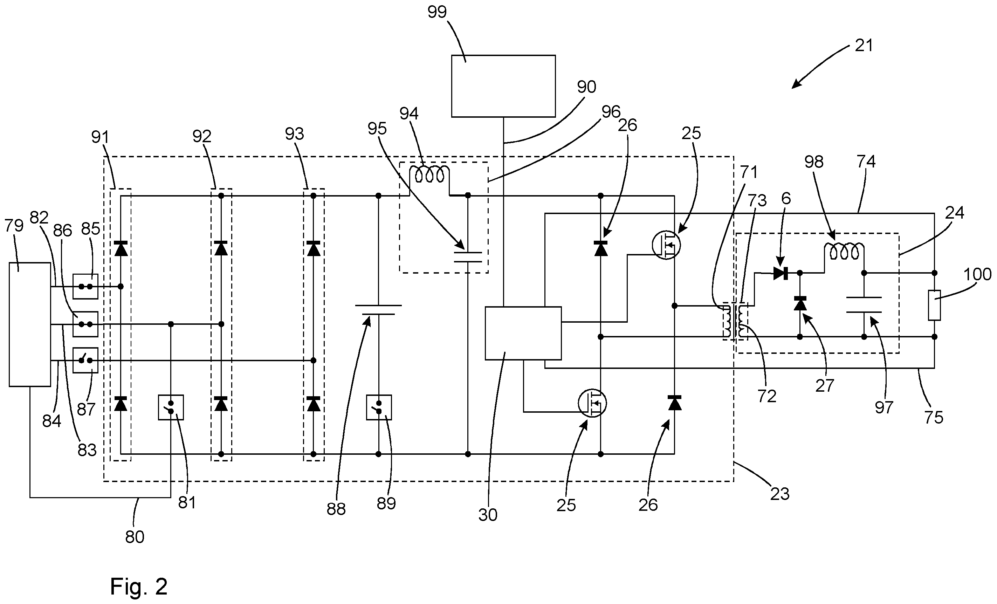

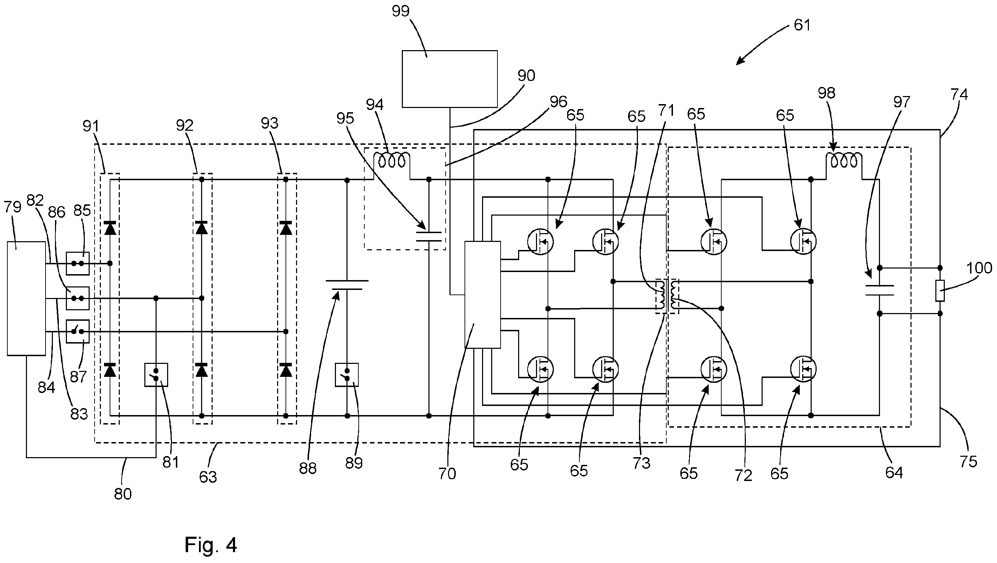

Bei der nachfolgenden Beschreibung der Figuren 1 bis 4 werden für funktionsgleiche Komponenten die gleichen Bezugszeichen verwendet.

Die in den Figuren 1 bis 4 gezeigten Ausführungsformen von Netzteilen 1, 21, 41, 61 sind jeweils nur exemplarisch zu verstehen, da es für jeden der Gleichspannungswandler aus der Gruppe: Sperrwandler, Eintaktflusswandler, Gegentaktflusswandler in Parallelspeisung, Gegentaktflusswandler mit Halbbrückenansteuerung, Gegentaktflusswandler mit Vollbrückenansteuerung auch abweichende Schaltungsaufbauten gibt.

Die in den Figuren 1 bis 4 jeweils eingezeichnete Wechselspannungsquelle 79 mit dem Nullleiter 80 und Nullleiterschalter 81 sowie den ersten bis dritten Phasenleitungen 82, 83, 84 und den zugeordneten ersten bis dritten Phasenschaltern 85, 86, 87 und die Gleichspannungsquelle 88 mit dem zugeordneten Gleichspannungsschalter 89 symbolisieren die jeweils möglichen elektrischen Versorgungen für die Netzteile 1, 21, 41, 61. Bei einer praktischen Ausgestaltung der Netzteile 1, 21, 41, 61 sind der Nulleiterschalter 81, die Phasenschalter 85, 86, 87 sowie auch der Gleichspannungsschalter 89 nicht vorhanden, da entweder nur eine Versorgung mit einem einphasigen oder zweiphasigen oder dreiphasigen Wechselstrom oder eine Versorgung mit einem Gleichstrom stattfindet.

Rein exemplarisch ist vorgesehen, dass die Netzteile 1, 21, 41, 61 jeweils mit einem zweiphasigen Wechselstrom versorgt werden. Dementsprechend sind der erste Phasenschalter 85 und der zweite Phasenschalter 86 geschlossen, während der Nullleiterschalter 81, der dritte Phasenschalter 87 und der Gleichspannungsschalter 89 geöffnet sind.

Bei einer nicht dargestellten elektrischen Versorgung der Netzteile 1, 21, 41, 61 mit einer einphasigen Wechselspannung sind Nullleiterschalter 81 und der erste Phasenschalter 85 geschlossen, während der zweite und dritte Phasenschalter 86, 87 und der Gleichspannungsschalter 89 geöffnet sind.

Bei einer nicht dargestellten elektrischen Versorgung der Netzteile 1, 21, 41, 61 mit einer dreiphasigen Wechselspannung sind alle Phasenschalter 85, 86, 87 geschlossen, während der Gleichspannungsschalter 89 und der Nullleiterschalter 81 geöffnet sind.

Bei einer nicht dargestellten elektrischen Versorgung der Netzteile 1, 21, 41, 61 mit einer Gleichspannung ist der Gleichspannungsschalter 89 geschlossen, während die Phasenschalter 85, 86, 87 und der Nullleiterschalter 81 geöffnet sind.

Um die Netzteile 1, 21, 51 und 61 in frei wählbarer Weise und ohne schaltungstechnische Veränderungen alternativ mit einer einphasigen oder zweiphasigen oder dreiphasigen Wechselspannung oder einer Gleichspannung versorgen zu können, umfasst jedes der Netzteile 1, 21, 41, 61 im jeweiligen Versorgungsstromkreis 3, 23, 43, 63 ein auch als erste Diodengruppe bezeichnetes erstes Diodenpaar 91, ein auch als zweite Diodengruppe bezeichnetes zweites Diodenpaar 92 sowie ein auch als dritte Diodengruppe bezeichnetes drittes Diodenpaar 93. Jedes der Diodenpaare 91, 92, 93 umfasst eine Reihenschaltung aus zwei Einzeldioden und ist zur Gleichrichtung einer an die jeweilige Phasenleitung 82, 83, 84 anschließbaren Wechselspannung ausgebildet. Die Diodenpaare 91, 92 und 93 bilden jeweils einen Brückengleichrichter für eine Wechselstromphase und sind jeweils parallel zueinander geschaltet sowie in Parallelschaltung zu einem auch als Zwischenkreiskondensator bezeichneten Tiefpasskondensator 95 angeordnet.

Der Versorgungsstromkreis 3 des in der Figur 1 gezeigten Netzteils 1 umfasst weiterhin eine Reihenschaltung einer Primärspule 71 und eines Leistungstransistors 5, wobei diese Reihenschaltung ihrerseits in Parallelschaltung zu den Diodenpaaren 91, 92, 93 sowie in Parallelschaltung zum Tiefpasskondensator 95 angeordnet sind. Der Tiefpasskondensator 95 bildet zusammen mit einer auch als Zwischenkreisspule bezeichneten Tiefpassspule 94, die in einer Reihenschaltung zwischen den Diodenpaaren 91, 92, 93 und der Primärspule 71 angeordnet ist, einen Tiefpassfilter 96. Die Aufgabe des Tiefpassfilters 96 besteht darin, die durch das Schalten des Leistungstransistors 5 verursachten hochfrequenten Störungen im Versorgungsstrom in Richtung der Phasenleitungen 82, 83, 84 und der Gleichspannungsquelle 88 zu blockieren.

Ferner umfasst das Netzteil 1 einen Verbraucherstromkreis 4, der als Reihenschaltung einer Sekundärspule 72, einer Gleichrichterdiode 6 und eines Pufferkondensators 97 ausgebildet ist. Ein rein exemplarisch als Widerstandsheizband 100 ausgebildeter elektrischer Verbraucher 100 ist in einer Parallelschaltung zum Pufferkondensator 97 angeschlossen.

Ferner ist vorgesehen, dass die Steuerung 10 über Sensorleitungen 74, 75 mit dem Widerstandsheizband 100 verbunden ist, um eine Erfassung eines elektrischen Widerstands des Widerstandsheizbands 100 und damit eine Temperaturbestimmung für das Widerstandsheizband 100 durchführen zu können.

Die Steuerung 10, die beispielsweise als Mikroprozessor mit einem darauf ablaufenden Computerprogramm ausgebildet sein kann, hat die Aufgabe, eine Temperaturregelung für das Widerstandsheizband 100 bereitzustellen. Hierzu erhält die Steuerung 10 über eine Kommunikationsleitung 90 ein Solltemperatursignal von einer übergeordneten Steuerung 99, bei der sich beispielsweise um eine Maschinensteuerung einer dargestellten Folienschweißmaschine, insbesondere um eine speicherprogrammierbare Steuerung (SPS) handeln kann.

Das Solltemperatursignal kann von der übergeordneten Steuerung 99 rein exemplarisch zwischen einem ersten Signalpegel, der einem Umgebungstemperaturwert von beispielsweise 20 Grad Celsius entspricht und einem zweiten Signalpegel, der einem Schweißtemperaturwert von beispielsweise 250 Grad Celsius entspricht, variiert werden. Die Aufgabe der Steuerung 10 besteht dann darin, den Leistungstransistor 5 derart anzusteuern, dass das Widerstandsheizband 100 derart vom Netzteil 1 mit elektrischer Leistung versorgt wird, dass die jeweils vorgegebene Solltemperatur erreicht wird. Hierzu erfolgt beispielsweise eine Ansteuerung des Leistungstransistors 5 mit einem pulsweitenmodulierten Ansteuersignal.

Bevorzugt ist vorgesehen, dass bei einer Versorgung des Netzteils 1 mit einer einphasigen oder zweiphasigen oder dreiphasigen Wechselspannung eine Ansteuerungsfrequenz für die Ansteuerung des Leistungstransistors 5 gewählt wird, die mit der doppelten Frequenz der bereitgestellten Wechselspannung variiert. Die Steuerung 10 kann eine automatische Anpassung der Ansteuerungsfrequenz für den Leistungstransistor 5 in Abhängigkeit von der jeweiligen elektrischen Versorgung des Netzteil 1 vornehmen und umfasst hierzu in dem Computerprogramm, das in dem Mikroprozessor der Steuerung 10 abläuft, einen entsprechenden Programmteil.

Das Computerprogramm der Steuerung 10 kann insbesondere eine dynamische Umschaltung der Ansteuerungsfrequenz für den Leistungstransistor 5 vornehmen, wenn beispielsweise ein Verlust einer von der Wechselspannungsquelle 79 bereitgestellten Phase eintritt. Hierbei ist die Steuerung 10 dazu ausgebildet, stets die optimale Pulsweitenmodulationsfrequenz passend zur momentanen elektrischen Versorgung und dem daraus resultierenden Spannungsniveau zu wählen. Durch die Anpassung der Ansteuerungsfrequenz proportional zur momentan anliegenden Zwischenkreisspannung wird sowohl eine Minimierung der Schaltverluste erreicht als auch für eine Reduzierung der Kernverluste, sowie für eine gleichbleibende magnetische Aussteuerung des aus der Primärspule 71, der Sekundärspule 72 und einem nicht gezeigten Ferritkern gebildeten Transformators 73 gesorgt. Das ist sogar dann möglich, wenn die Netzspannung einen nicht sinusförmigen Verlauf hat.

Konkret wird von der Steuerung 10 die momentan anliegende Versorgungsspannung gemessen und die Pulsdauer der nächsten Pulsweitenmodulationsperiode aus der gewünschten magnetischen Flussänderung berechnet, so dass die gewünschte magnetische Aussteuerung des Ferritkerns des Transformators 73 erzielt wird.

Die an das Widerstandsheizband 100 bereitgestellte elektrische Leistung oszilliert vorzugsweise mit der doppelten Frequenz der bereitgestellten Wechselspannung. Dies ist für die Durchführung eines Schweißvorgangs für Kunststofffolien aufgrund der thermischen Trägheit des Widerstandsheizbands 100 akzeptabel und führt dazu, dass das Netzteil 1 mit einem elektrischen Leistungsfaktor von nahezu 100 Prozent betrieben werden kann. Dies ist darauf zurückzuführen, dass der Strom und die Spannung im Versorgungsstromkreis 3 des Netzteils 1 proportional zueinander sind.

Das Netzteil 21 umfasst einen Eintakt-Flusswandler, bei dem abweichend vom Netzteil 1 im Versorgungstromkreis 23 eine Parallelschaltung von zwei Leistungstransistoren 25 vorgesehen ist, wobei dem einen Leistungstransistor 25 eine Gleichrichterdiode 26 vorgeschaltet und dem anderen der Leistungstransistor 25 eine Gleichrichterdiode 26 nachgeschaltet ist. Beide Leistungstransistoren 25 und beide Gleichrichterdioden 26 sind jeweils in identischer Polung und in Parallelschaltung zur Primärspule 71 in dem Versorgungsstromkreis 23 angeordnet. Der Verbraucherstromkreis 24 ist als Reihenschaltung der Sekundärspule 72, der Gleichrichterdiode 6, einer Verbraucherspule 98 und des Pufferkondensators 97 ausgebildet. Zudem ist eine weitere Gleichrichterdiode 27 vorgesehen, die in einer Parallelschaltung zum Pufferkondensator 97 angeordnet ist und an einem ersten Spulenende der Verbraucherspule 98 angeschlossen ist, während der Pufferkondensator 97 an einem zweiten Spulenende der Verbraucherspule 98 angeschlossen ist. Der als Widerstandsheizband 100 ausgebildete elektrische Verbraucher 100 ist in einer Parallelschaltung zum Pufferkondensator 97 angeschlossen.

Die Steuerung 30 ist zur Bereitstellung von Ansteuersignalen an die beiden Leistungstransistoren 25 ausgebildet. Ferner ist die Steuerung 30 über Sensorleitungen 74, 75 mit dem Widerstandsheizband 100 verbunden, um eine Erfassung eines elektrischen Widerstands des Widerstandsheizbands 100 und damit eine Temperaturbestimmung für das Widerstandsheizband 100 durchführen zu können.

Die Betriebsweise für die Steuerung 30 ist auf die gleichen Zielsetzungen wie die vorstehend beschriebene Betriebsweise für die Steuerung 10 gerichtet, so dass hinsichtlich der Betriebsweise für die Steuerung 30 auf die vorstehenden Ausführungen zur Betriebsweise der Steuerung 10 verwiesen werden kann.

Das Netzteil 41 umfasst einen Gegentakt-Flusswandler, bei dem im Versorgungsstromkreis 43 eine Reihenschaltung von zwei Leistungstransistoren 45 mit einer Reihenschaltung von zwei Kondensatoren 46 parallelgeschaltet ist. Die Primärspule 71 ist mit einem ersten Spulenende elektrisch zwischen den beiden Leistungstransistoren 45 und mit einem zweiten Spulenende elektrisch zwischen den beiden Kondensatoren angeschlossen.

Auf der Sekundärseite des Transformators 73 ist die Sekundärspule 72 mit einem ersten Spulenende elektrisch mit einer ersten Reihenschaltung von Gleichrichterdioden 47 und mit einem zweiten Spulenende elektrisch mit einer zweiten Reihenschaltung von Gleichrichterdioden 47 verbunden, die einen passiven Brückengleichrichter für den Verbraucherstromkreis 44 bilden. Die beiden Reihenschaltungen von Gleichrichterdioden 47 sind parallel zum Pufferkondensator 97 geschaltet. Zwischen den beiden Reihenschaltungen von Gleichrichterdioden 47 und dem Pufferkondensator 97 ist die Verbraucherspule 98 angeordnet.

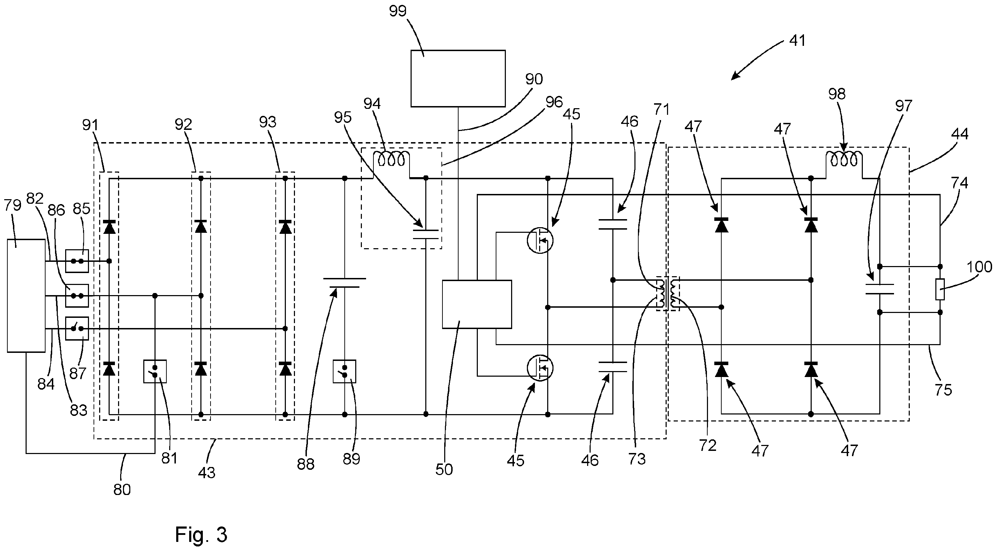

Der in der Figur 3 gezeigte Gegentakt-Flusswandler wird auch als Gegentakt-Flusswandler mit Halbbrücke im Primärkreis und passiver Gleichrichtung im Sekundärkreis bezeichnet.

Der als Widerstandsheizband 100 ausgebildete elektrische Verbraucher 100 ist in einer Parallelschaltung zum Pufferkondensator 97 angeschlossen.

Die Steuerung 50 ist zur Bereitstellung von Ansteuersignalen an die beiden Leistungstransistoren 45 ausgebildet. Ferner ist die Steuerung 50 über Sensorleitungen 74, 75 mit dem Widerstandsheizband 100 verbunden, um eine Erfassung eines elektrischen Widerstands des Widerstandsheizbands 100 und damit eine Temperaturbestimmung für das Widerstandsheizband 100 durchführen zu können.

Die Betriebsweise für die Steuerung 50 ist auf die gleichen Zielsetzungen wie die vorstehend beschriebene Betriebsweise für die Steuerung 10 gerichtet, so dass hinsichtlich der Betriebsweise für die Steuerung 50 auf die vorstehenden Ausführungen zur Betriebsweise der Steuerung 10 verwiesen werden kann.

Das Netzteil 61 umfasst einen Gegentakt-Flusswandler, der mit einer Vollbrücke im Primärkreis und mit synchroner Gleichrichtung im Sekundärkreis ausgebildet ist.

Hierbei ist im Versorgungsstromkreis 63 eine erste Reihenschaltung von zwei Leistungstransistoren 65 mit einer zweiten Reihenschaltung von zwei Leistungstransistoren 65 parallelgeschaltet. Die Primärspule 71 ist mit einem ersten Spulenende elektrisch zwischen den beiden Leistungstransistoren 65 der ersten Reihenschaltung von Leistungstransistoren 65 und mit einem zweiten Spulenende elektrisch zwischen den beiden Leistungstransistoren 65 der zweiten Reihenschaltung von Leistungstransistoren 65 angeschlossen.

Auf der Sekundärseite des Transformators 73 ist die Sekundärspule 72 mit einem ersten Spulenende elektrisch mit einer dritten Reihenschaltung von Leistungstransistoren 65 und mit einem zweiten Spulenende elektrisch mit einer vierten Reihenschaltung von Leistungstransistoren 65 verbunden, die einen aktiven Brückengleichrichter für den Verbraucherstromkreis 64 bilden. Die beiden sekundärseitigen Reihenschaltungen von Leistungstransistoren 65 sind parallel zum Pufferkondensator 97 geschaltet. Zwischen den beiden Reihenschaltungen von Leistungstransistoren 65 und dem Pufferkondensator 97 ist die Verbraucherspule 98 angeordnet.

Der als Widerstandsheizband 100 ausgebildete elektrische Verbraucher 100 ist in einer Parallelschaltung zum Pufferkondensator 97 angeschlossen.

Die Steuerung 70 ist zur Bereitstellung von Ansteuersignalen an die insgesamt acht Leistungstransistoren 45 ausgebildet. Ferner ist die Steuerung 50 über Sensorleitungen 74, 75 mit dem Widerstandsheizband 100 verbunden, um eine Erfassung eines elektrischen Widerstands des Widerstandsheizbands 100 und damit eine Temperaturbestimmung für das Widerstandsheizband 100 durchführen zu können.

Die Betriebsweise für die Steuerung 70 ist auf die gleichen Zielsetzungen wie die vorstehend beschriebene Betriebsweise für die Steuerung 10 gerichtet, so dass hinsichtlich der Betriebsweise für die Steuerung 70 auf die vorstehenden Ausführungen zur Betriebsweise der Steuerung 10 verwiesen werden kann.

## Patentansprüche

1. Netzteil (1; 21; 41; 61) zur elektrischen Versorgung eines Widerstandsheizbands (100), mit einem Gleichspannungswandler aus der Gruppe: Sperrwandler, Eintaktflusswandler, Gegentaktflusswandler in Parallelspeisung, Gegentaktflusswandler mit Halbbrückenansteuerung, Gegentaktflusswandler mit Vollbrückenansteuerung, wobei der Gleichspannungswandler einen Versorgungsstromkreis (3; 23; 43; 63) mit einer Primärspule (71) und einen Verbraucherstromkreis (4; 24; 44; 64) mit einer Sekundärspule (72) aufweist, wobei die Primärspule (71) und die Sekundärspule (72) einen Transformator (73) bilden, wobei der Versorgungsstromkreis (3; 23; 43; 63) eine Parallelschaltung der Primärspule (71) mit einer ersten Diodengruppe (91), die eine Reihenschaltung von zwei Dioden umfasst, und mit einer zweiten Diodengruppe (92), die eine Reihenschaltung von zwei Dioden umfasst, aufweist und wobei der Versorgungsstromkreis (3; 21; 41; 61) eine Reihenschaltung der Primärspule (71) mit einem Leistungstransistor (5; 25; 45; 65) aufweist, wobei der Leistungstransistor (5; 25; 45; 65) elektrisch mit einer Steuerung (10; 30; 50; 70) verbunden ist, die dazu ausgebildet ist, eine Ansteuerung des Leistungstransistors (5; 25; 45; 65) in Abhängigkeit von einer Bereitstellung einer Gleichspannung oder einer einphasigen Wechselspannung oder einer zweiphasigen Wechselspannung an den Versorgungsstromkreis (3; 21; 41; 61) vorzunehmen.

2. Netzteil (1; 21; 41; 61) nach Anspruch 1, **dadurch gekennzeichnet, dass** der Versorgungsstromkreis (3; 21; 41; 61) eine Parallelschaltung der Primärspule (71) mit einer dritten Diodengruppe (93), die eine Reihenschaltung von zwei Dioden aufweist, umfasst und dass die Steuerung (10; 30; 50; 70) dazu ausgebildet ist, eine Ansteuerung des Leistungstransistors (5; 25; 45; 65) in Abhängigkeit von einer Bereitstellung einer dreiphasigen Wechselspannung an den Versorgungsstromkreis (3; 21; 41; 61) vorzunehmen.

3. Netzteil (1; 21; 41; 61) nach Anspruch 1 oder 2, **dadurch gekennzeichnet, dass** im Versorgungsstromkreis (3; 21; 41; 61) eine Reihenschaltung der Primärspule (71) mit einer Zwischenkreisspule (94) und eine Parallelschaltung der Primärspule (71) mit einem Zwischenkreiskondensator (95) vorgesehen ist, wobei die Zwischenkreisspule (94) und der Zwischenkreiskondensator (95) einen Tiefpassfilter mit einer Grenzfrequenz von wenigstens 3 kHz, vorzugsweise wenigstens 4 kHz, insbesondere wenigstens 5 kHz, bilden.

4. Netzteil (1; 21; 41; 61) nach Anspruch 3, **dadurch gekennzeichnet, dass** der Zwischenkreiskondensator (95) eine Kapazität aufweist, die derart gewählt ist, dass eine Zwischenkreisspannung und eine Verbraucherspannung bei einer Leistungsabgabe an eine ohmsche Last (100) mit einer Frequenz oszillieren, die der Frequenz der gleichgerichteten Wechselspannung entspricht.

5. Netzteil (1; 21; 41; 61) nach Anspruch 4, **dadurch gekennzeichnet, dass** die Steuerung (10; 30; 50; 70) für eine Messung eines zeitlichen Verlaufs der Zwischenkreisspannung sowie für eine Umschaltung zwischen unterschiedlichen Ansteuerfrequenzen für den Leistungstransistor (5; 25; 45; 65) bei einer Umschaltung der Versorgungsspannung zwischen einem einphasigen oder zweiphasigen oder dreiphasigen Betrieb ausgebildet ist.

6. Netzteil (1; 21; 41; 61) nach Anspruch 3, 4 oder 5, **dadurch gekennzeichnet, dass** der Zwischenkreiskondensator (95) eine Kapazität kleiner 50 Mikrofarad, vorzugsweise kleiner 25 Mikrofarad, besonders bevorzugt kleiner 15 Mikrofarad, insbesondere kleiner 10 Mikrofarad, aufweist.

7. Netzteil (1; 21; 41; 61) nach einem der vorhergehenden Ansprüche, **dadurch gekennzeichnet, dass** die Steuerung (10; 30; 50; 70) dazu ausgebildet ist, die zur zyklischen Ansteuerung des Leistungstransistors (5; 25; 45; 65) genutzte Ansteuerungsfrequenz proportional zu einer Zwischenkreisspannung im Versorgungsstromkreis (3; 21; 41; 61) anzupassen.

8. Netzteil (1; 21; 41; 61) nach einem der vorhergehenden Ansprüche, **dadurch gekennzeichnet, dass** die Steuerung (10; 30; 50; 70) elektrisch mit einem Sensor verbunden ist, der zur Bereitstellung eines Sensorsignals in Abhängigkeit von einer Temperatur eines Widerstandsheizbands (100) ausgebildet ist.

9. Verfahren zur Bereitstellung von elektrischer Leistung an ein Widerstandsheizband (100), **dadurch gekennzeichnet, dass** bei einer Bereitstellung einer einphasigen Versorgungsspannung oder einer zweiphasigen Versorgungsspannung an einen Versorgungsstromkreis (3; 21; 41; 61) eines Gleichspannungswandlers aus der Gruppe: Sperrwandler, Eintaktflusswandler, Gegentaktflusswandler in Parallelspeisung, Gegentaktflusswandler mit Halbbrückenansteuerung, Gegentaktflusswandler mit Vollbrückenansteuerung eine Bereitstellung einer Verbraucherspannung in einem Verbraucherstromkreis (4; 24; 44; 64) des Gleichspannungswandlers phasengleich zur Versorgungsspannung erfolgt.

10. Verfahren nach Anspruch 9, **dadurch gekennzeichnet, dass** eine Steuerung des Gleichspannungswandlers einen Leistungstransistor (5; 25; 45; 65) in einem Versorgungsstromkreis (3; 21; 41; 61) in Abhängigkeit von einer Bereitstellung einer einphasigen oder zweiphasigen Versorgungsspannung ansteuert.

11. Verfahren nach Anspruch 9 oder 10, **dadurch gekennzeichnet, dass** die Steuerung (10; 30; 50; 70) eine Zwischenkreisspannung im Versorgungsstromkreis (3; 21; 41; 61) des Gleichspannungswandlers ermittelt und eine Ansteuerungsfrequenz für den Leistungstransistor (5; 25; 45; 65) proportional zur ermittelten Zwischenkreisspannung einstellt.

12. Verfahren nach Anspruch 11, **dadurch gekennzeichnet, dass** die Steuerung (10; 30; 50; 70) ein Sensorsignal eines Temperatursensors für eine Pulsweitenmodulation der Ansteuerungsfrequenz für den Leistungstransistor (5; 25; 45; 65) verwendet.

13. Verfahren nach Anspruch 12, **dadurch gekennzeichnet, dass** die Steuerung (10; 30; 50; 70) bei einer Ausgestaltung des Gleichspannungswandlers als Gegentaktflusswandler mit Vollbrückenansteuerung eine phasenverschobene Pulsweitenmodulation der Ansteuerungsfrequenz für den Leistungstransistor (5; 25; 45; 65) verwendet, um einen Schaltvorgang des Leistungstransistors (5; 25; 45; 65) bei verschwindender Spannung zu erreichen.
